# EUROPEAN PATENT APPLICATION

(11) **EP 1 489 483 A1**
(43) Date of publication of application: **22.12.2004**
(21) Application number: 03744059.1
(22) Date of filing: 11.03.2003
(51) Int. Cl.: G06F 3/033

(54) **MULTICOLOR LIGHT EMITTING TRACK BALL**

(30) Priority: 12.03.2002 JP 2002067521
(71) Applicant: Tamagawa Seiki Co. Ltd., Iida-shi, Nagano 395-8515 (JP); Hama, Nobuharu, Hachinohe-shi, Aomori 039-2245 (JP)
(72) Inventor: HAMA, N., Hachinohe-pl., Tamagawa Seiki Co. Ltd., Hachinohe-shi, Aomori 039-2245 (JP)
(74) Representative: Jenkins, Peter David
(86) International application number: PCT/JP2003/002875
(87) International publication number: WO 2003/077109

(57) **Abstract**

A multicolor light emitting track ball capable of emitting different colors, comprising a light transmitting ball (1), a light transmitting case (2) for storing the inner structure of a detection shaft therein, and a plurality of light sources (31, 32, and others), disposed in the case (2), having an unshown cover and emitting different colors of light to illuminate the ball by radiating lights (L31, L32, and others) to the ball (1), wherein a total of three light sources (31, 32, 33) are installed as light sources to emit red, green, and blue colors which are the three primary colors of light.

## Description

### Technical Field

The present invention relates to a multicolor light emitting track ball. More particularly, it relates to a multicolor light emitting track ball having a plurality of light sources emitting light with different colors.

### Background Art

A track ball, which is a pointing device for a computer and other various types of digital equipment, has a ball, which is an input operation part, an internal structure consisting of a detecting shaft etc. for detecting the rotation of ball, and a housing for containing a part of the ball and the internal structure. Recently, in product development, much importance has been attached to not only extended function but also design. In the case of track ball as well, there has already been devised and developed a light emitting track ball having both extended function such as increased operability at a dark place etc. and a feature in terms of design. The track ball of this type is made of a transparent or semitransparent material, and is made shine by irradiating the ball with light by using a light source such as a light emitting diode (hereinafter referred to as an "LED") provided in a case for the track ball.

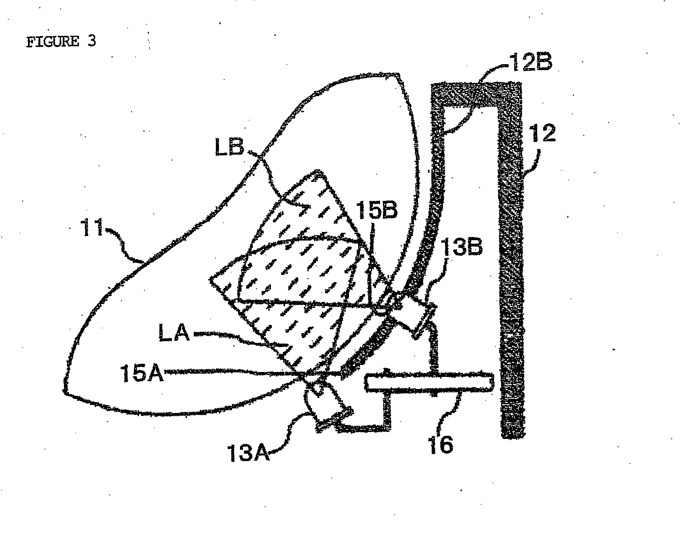

Figure 3 is an explanatory view showing one example of a method for irradiating the conventional light emitting track ball with light, viewed from the side. In Figure 3, the conventional light emitting track ball has a transparent or semitransparent ball 11, a case 12, and a cover (not shown), and lamps 13A and 13B such as LED's, which are light sources for emitting light to make the ball 11 shine, are provided in the case 12. Since the case 12 is opaque, in order to irradiate the ball 11 with light emitted from the lamps 13A and 13B, holes 15A and 15B for transmitting light are provided in a ball-side portion 12B of the case 12, which is on the side facing the ball 11. The lamps 13A and 13B are insertedly fitted in these holes 15A and 15B, or are provided in such a state that the ball 11 can be irradiated with light through these holes 15A and 15B.

In Figure 3, by this configuration, the conventional light emitting track ball can be configured so that the ball 11 is irradiated with light emitted from the lamps 13A and 13B through the holes 15A and 15B, by which the ball 11 is made to shine.

In Figure 3, because the incorporated lamp 13A etc. emit particular monochromatic light, the transparent or semitransparent ball 11 is irradiated with light LA etc. emitted by the lamp 13A etc., and emits monochromatic light based on the irradiation of monochromatic light.

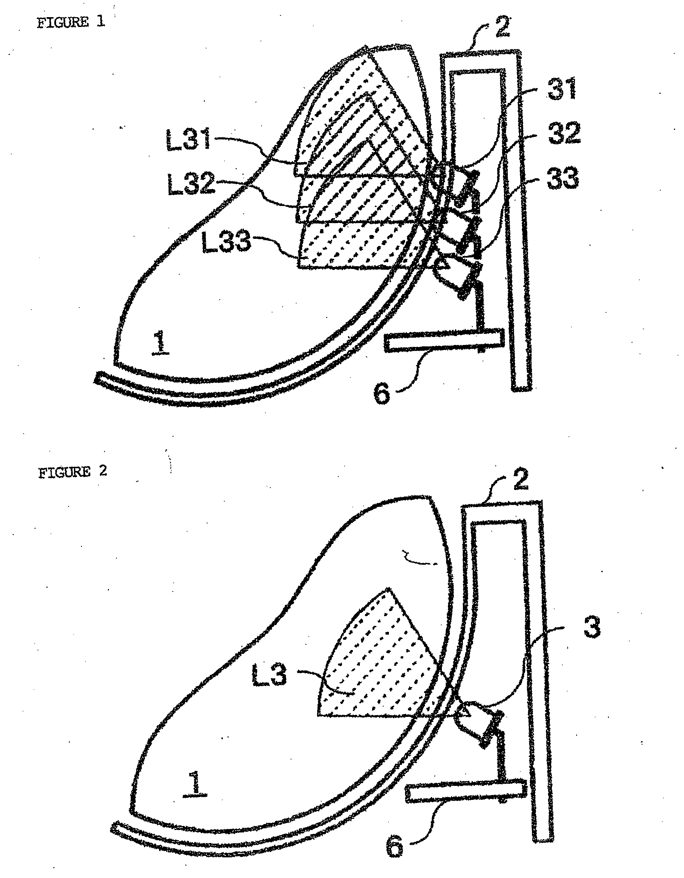

Figure 2 is an explanatory view showing a schematic configuration of one example of a light emitting track ball that has earlier been invented by the inventors and proposed by the applicant of the present invention (Application Number: Japanese Patent Application No. 2002-20796, Title of the Invention: "Track Ball"). In Figure 2, the track ball of this invention mainly includes a transparent or semitransparent ball 1 that transmits light, a case 2 containing an internal structure such as a detecting shaft, and a cover, not shown, and a lamp 3 such as an LED, which is a light source for emitting light to make the ball 1 shine, is provided in the case 2. The case 2 is characterized by being transparent or semitransparent.

In Figure 2, since this invention is configured as described above, light L3 emitted by the light source 3 goes through the transparent or semitransparent case 2 that transmits light, and is applied to the ball 1, by which the ball 1 can be made to shine. The light source 3 can be placed at an appropriate location in the case 2, and there is no need for forming a hole in the case 2 to irradiate the ball 1 with the light L3. Therefore, foreign matters such as water and dirt can be prevented from intruding into the case 2. Also, the light source can also be provided on the outside of the case 2, though not shown in the figure. The light emitted by the light source goes through the transparent or semitransparent case 2 that transmits light, and is applied to the ball 1, by which the ball 1 can be made to shine.

The light emitting track ball of this invention solves technical problems with the conventional light emitting track ball by making the case transparent or semitransparent, the conventional problem being such that there is a need for forming a hole in the case to irradiate the ball with the light emitted by the light source, and hence foreign matters intrude into the case.

In Figure 2, because the incorporated lamp 3 etc. emit particular monochromatic light, the transparent or semitransparent ball 1 is irradiated with light L3 etc. emitted by the lamp 3 etc., and emits monochromatic light based on the irradiation of monochromatic light.

However, for the conventional light emitting track ball and the above-described light emitting track ball proposed by the inventors, since the ball emits only monochromatic light as described above, the function that can be performed by the illuminator itself is limited to a function performed as display means for displaying a certain limited information such as the current position of the ball itself or the operation state of device provided with the track ball although these light emitting tack balls have some degree of technical effect such as improvement in operability at a dark place etc. and a design feature as compared with a non-light emitting track ball.

In today's highly information-oriented society, functions fulfilled by a computer and other various types of digital equipment become sophisticated and high in density in a variety of fields including factory automation (FA), office automation (OA) , and medical care. In such a situation, for the interface between the equipment and human beings who operates it, it is required to further enhance, qualitatively and quantitatively, the function of supplying information regarding various contents included in the equipment and information having usefulness. For the track ball, which is a pointing device, as well, although a light emitting track ball that fulfils a function higher than the function performed as a pointing device has been provided as described above, it is desirable to further improve and extend the function performed as the display means in the conventional light emitting track ball.

Further, in advancing the interface between the equipment and human beings, the role played by the improvement and diversification in design is also of importance.

An object of the present invention is to provide a multicolor light emitting track ball having a plurality of light sources emitting different colors in a light emitting track ball based on the current situation of the prior art and the request for advanced interface between equipment and human beings.

### Disclosure of the Invention

The inventors earnestly studied the above-described problems and arrived at solutions. As means for solving the above-described problems, the inventions claimed in this application are as follows:
(1) A multicolor light emitting track ball having a light transmitting ball and a light source for irradiating the ball with light and causing the ball to emit light, characterized in that the light source is provided in plural number, and each of the light sources emits light of a different color.
(2) The multicolor light emitting track ball of item (1), characterized in that light source control means is provided to individually control the luminance of the light source for each light source, and to cause the ball to emit light of an arbitrary color by the combination of the individual control.
(3) The multicolor light emitting track ball of item (2), characterized in that the light source control means can continuously change the luminance of light source to be controlled, and can continuously change the color of light emitted by the ball.
(4) The multicolor light emitting track ball of item (2) or (3), characterized in that the light source control means has a luminance control circuit for controlling the luminance of light source, and the control of light source by the luminance control circuit is carried out by another particular electronic circuit connected to the luminance control circuit.
(5) The multicolor light emitting track ball of any one of items (1) to (4), characterized in that three light sources are provided to emit light of red, green and blue colors.
(6) The multicolor light emitting track ball of any one of items (1) to (5), characterized in that the light source is a lamp or a light emitting diode.
(7) A lightness-changing type multicolor light emitting track ball having a light transmitting ball and a light source for irradiating the ball with light and causing the ball to emit light, characterized in that the hue of color generated by the light source is single, and light source control means is provided to control the luminance of the light source.
(8) The lightness-changing type multicolor light emitting track ball of item (7), characterized in that the light source control means can continuously change the luminance of light source to be controlled, and can continuously change the lightness of color of light emitted by the ball.
(9) The lightness-changing type multicolor light emitting track ball of item (7) or (8), characterized in that the light source control means has a luminance control circuit for controlling the luminance of light source, and the control of light source by the luminance control circuit is carried out by another particular electronic circuit connected to the luminance control circuit.

In the present invention, the light sources, which have conventionally been provided with single color, are configured by a plurality of different colors, by which light emission of the ball is made of a multicolor light emitting type, and hence the display function of ball is diversified and advanced. Further, the configuration of color of light applied to the ball is made changeable by the luminance control of the light sources, and arbitrary setting of luminescent color of the ball is enabled by the synthesis of light, by which the display function of ball is further diversified and advanced.

In the present invention, the term "multicolor light emitting" means that the ball of light emitting track ball is capable of developing at least two kinds of colors, not capable of always developing only a single light of, for example, white or red. The kind of color capable of being developed is not subject to any restriction, and all of the hues, saturations, and lightnesses can be included. That is, colors having all combination of these three elements of color can be developed.

Therefore, the multicolor light emitting also includes the case where the lightness of blue color is changed continuously or discontinuously from dark color to light color, that is, only the lightness is changed without the change of hue and saturation, not including the case where the hue is changed from blue to purple, or further to red and to orange as in the case of the later-described lightness-changing light emitting track ball.

Also, in the present invention, the term "multicolor light emitting" also means that different colors are developed with time on the light emitting track ball by the light source control means that changes the luminance of light source with time.

The above-described time change of the luminance of light source includes both continuous and discontinuous changes of developed color. Therefore, the case where, for example, when at least any one of elements of hue, saturation, and lightness changes with time, the luminance of light source changes so that the change of element is made continuously is included, and on the other hand, the case where when at least any one of these elements changes with time, the luminance of light source changes so that the change of element is made discontinuously is also included.

In the present invention, the term "lightness-changing light emitting type" means a type in which the hue or the hue and saturation of color developed by the light source is one particular kind, and the lightness of luminescent color of the ball irradiated with the light can be changed by changing the luminance of light source of single color by means of the light source control means. Therefore, in the lightness-changing light emitting type, for example, the hue cannot be changed from blue to purple, or further to red and to orange, but, for example, the lightness of yellowish green color can be changed continuously or discontinuously from dark color to light color. The lightness-changing light emitting track ball is not limited by the number of light sources provided.

In the present invention, the term "light transmitting property" means a property that light is transmitted, and a transparent or semitransparent material has this property. The light is electromagnetic waves that are a physical cause for stimulating human eyes to produce the sense of sight. It is mainly visible light, but at least some of infrared rays or ultraviolet rays is not excluded.

In the present invention, as the light source, a lamp generating light by means of temperature radiation or luminescence or an LED is used. However, the light source is not limited to these, and any means that emits light can be used as the light source of the present invention.

In the present invention, the term "light source control means" is defined as means capable of changing the luminescent color of the ball irradiated with the light by the control of the luminance of light source. The light source control means can include the luminance control circuit, which is an electronic circuit capable of controlling the luminance of light source. When a plurality of light sources are provided, the light source control means or the luminance control circuit can be provided for each of the light sources. Also, in this case, there can further be provided a host light source control means that collectively controls the luminance control circuits for individual light sources and controls the sequence of individual control. Also, there can be provided a system that controls all luminances of a plurality of kinds of light sources by using a single light source control means.

In the present invention, light can be applied to the ball from the light source through a transparent or semitransparent case as disclosed in the before-mentioned prior invention made by the inventors (Japanese Patent Application No. 2002-20796 "Track Ball"). However, the multicolor light emitting track ball in accordance with the present invention is not limited to this irradiation method. An irradiation method in which light passes through a hole in an opaque case as in the conventional light emitting track ball, and other irradiation methods can be used.

### Brief Description of the Drawings

Figure 1 is an explanatory view showing one example of a method for irradiating a multicolor light emitting track ball in accordance with the present invention with light, viewed from the side;
Figure 2 is an explanatory view showing a schematic configuration of one example of a light emitting track ball that has earlier been invented by the inventors; and
Figure 3 is an explanatory view showing one example of a method for irradiating the conventional light emitting track ball with light, viewed from the side.

Symbols used in these figures designate the followings. 1, 11 ... ball, 2, 12 ... case, 31, 32, 33 ... light source, 3, 4, 13A, 13B ... light source, 6, 16 ... base plate, L31, L32, L33 ... light irradiation, L3, L4, LA, LB ... light irradiation

### Best Mode for Carrying Out the Invention

The present invention will now be described in detail with reference to the accompanying drawing. The present invention is not limited to an embodiment described below. Explanation is given by applying the same reference numerals to the same elements as those shown in Figure 2.

Figure 1 is an explanatory view showing one example of a method for irradiating a multicolor light emitting track ball in accordance with the present invention with light, viewed from the side. In this figure, the multicolor light emitting track ball has a light transmitting ball 1, a light transmitting case 2 containing an internal structure such as a detecting shaft, and a cover, not shown, and a plurality of light sources 31, 32, ... that emit different colors are provided in the case 2, the light sources 31, 32, ... being configured so that the ball 1 is irradiated with light L31, L32, ... to cause the ball 1 to emit light of different color.

In the case where the case 2 has a light transmitting property as shown in Figure 1, the light sources 31, 32, ... can be provided on the outside of the case 2 (though not shown in the figure), not on the inside thereof. Also, in the case where the case 2 does not have a light transmitting property as in the case of the conventional light emitting track ball, a hole (not shown) can be provided in the case 2 so that the light emitted from the light sources 31, 32, ... passes through the hole and the ball 1 is irradiated with the light.

In Figure 1, a total of three light sources 31, 32 and 33 are provided as the light sources. However, the number of light sources for the multicolor light emitting track ball in accordance with the present invention is not limited to three. Two or four and more light sources may be used. In the case where three light sources are provided as shown in Figure 1, three primary colors, red, green and blue, can be emitted.

In Figure 1, as the light sources 31, 32 and 33, lamps or LED's can be used.

Since the multicolor light emitting track ball in accordance with the present invention shown in Figure 1 is configured as described above, light L31, L32, ... of two or more kinds of different colors, emitted by the light sources 31, 32, ... , goes through the light transmitting case 2, and is applied to the ball 1. Thereby, the ball 1 can be caused to emit light of a plurality of luminescent colors based on two or more kinds of light.

In the case where the case 2 has a light transmitting property as shown in Figure 1, the light sources 31, 32, ... can be provided on the outside of the case 2 (though not shown in the figure), not on the inside thereof as described above. In this case, the light of different colors emitted from the light sources 31, 32, ... goes through the case material of the case 2 two times, and is applied to the ball 1, by which the ball 1 can be caused to emit light of a plurality of luminescent colors.

Also, in the case where the case 2 does not have a light transmitting property as in the case of the conventional light emitting track ball, a hole (not shown) can be provided in the case 2 so that the light emitted from the light sources 31, 32, ... passes through the hole and the ball 1 is irradiated with the light. In this case, the light of different colors emitted from the light sources 31, 32, ... passes through the hole and is applied to the ball 1, by which the ball 1 can be caused to emit light of a plurality of luminescent colors.

In the case where a total of three light sources 31, 32 and 33 emitting light of red, green and blue colors are provided as the light sources, light source control means including a luminance control circuit, which is an electronic circuit provided for individual light sources to control the luminance, is configured appropriately, by which the kind and luminance of light applied to the ball 1 are combined arbitrarily. The light emitted by the three light sources is applied to the ball 1, and the light is synthesized on the ball 1, by which the luminescent color of the ball 1 can be synthesized arbitrarily.

In Figure 1, for example, in the case where the light source 31 is one for emitting light of red color, the light source 32 of blue color, and the light source 33 of green color, depending on the function of light source control means, the ball 1 can be caused to emit light of arbitrary luminescent color as described below. For example,
(A) When the ball 1 is caused to emit light of red color, the luminance output of the light source 31 is set at 100%, and those of light sources 32 and 33 are set at 0%,
(B) When the ball 1 is caused to emit light of blue color, the luminance output of the light source 32 is set at 100%, and those of light sources 31 and 33 are set at 0%,
(C) When the ball 1 is caused to emit light of green color, the luminance output of the light source 33 is set at 100%, and those of light sources 31 and 32 are set at 0%,
(D) When the ball 1 is caused to emit light of white color, the luminance outputs of all of the light sources 31, 32 and 33 are set at 100%,
(E) When the ball 1 is caused to emit light of purple color, the luminance outputs of the light source 31 and 32 are set at 100%, and that of light source 33 is set at 0%.
Furthermore, by appropriately controlling the output level in the luminance control of light sources 31, 32 and 33, any color can be synthesized, and hence the ball 1 can be caused to emit various luminescent colors.

The aforementioned light source control means is provided with single light source control means capable of carrying out luminance control collectively for each light source so that the luminance of light sources 31, 32 and 33 to be controlled is changed continuously, by which the color emitted by the ball 1 can be changed continuously or periodically.

As the continuous light source control, single light source control means that carries out control collectively for each light source is used to control the luminance of light sources of three colors regularly. Besides, the control method can be set arbitrarily. For example, individual light source control means are provided for only some light sources, and host light source control means for carrying out control collectively is provided for other light sources, by which when the individual light source control means or the host light source control means receives a particular signal from the outside, the host light source control means carries out control on the individual light source control means.

Specifically, the control of light source by the luminance control circuit in the light source control means can be configured so as to be carried out by a signal generated in another particular electronic circuit connected to the luminance control circuit. For example, in a personal computer etc. compatible with an electronic mail system, usually, based on the light source control of light sources of red and blue colors, light is emitted by a continuous and periodic change in luminescent color of ball by the control of luminance of each color. When an electronic mail is received, a signal relating to the signal reception information generated in a particular electronic circuit relating to the reception of electronic mail is transmitted to the light source control means. The light source control means brightens the luminescence of ball by raising the luminance of light source of green color, the luminance output level of which is usually 0%, to 100%, by which the control for display of electronic mail reception can be configured.

In addition to the display of electronic mail reception, the display of various states in an external device or external system connected to digital equipment, which are to be monitored or controlled by the digital equipment such as a computer equipped with the multicolor light emitting track ball in accordance with the present invention, the display of various states of hardware and software in digital equipment equipped with the track ball, the display of completion, execution state, or result of job requiring a certain period of time, such as medium initialization and writing job of high-capacity data, the display of operator's state based on the frequency of miss touch in input job, and the like can be effected by the light source control means that displays the state by providing a plurality of levels by using the multicolor light emitting track ball in accordance with the present invention.

For the lightness-changing light emitting track ball in accordance with the present invention having a feature such that the hue of color generated by the light source is the same, and the light source control means is provided to control the luminance of the light source, the hue of luminescent color is single, and only the lightness thereof changes. Therefore, the operation and effects thereof are limitative as compared with the multicolor light emitting track ball in accordance with the present invention, but can perform a function as display means, which cannot be performed by the conventional light emitting track ball.

### Industrial Applicability

Since the multicolor light emitting track ball in accordance with the present invention is configured as described above, a function as display means in the conventional light emitting track ball can be advanced and extended.

Further, the improvement and diversification of design, which is important in advancing the interface between digital equipment such as a computer and human beings, can be achieved.

## Claims

1. A multicolor light emitting track ball having a light transmitting ball and a light source for irradiating said ball with light and causing said ball to emit light, **characterized in that** said light source is provided in plural number, and each of said light sources emits light of a different color.

2. The multicolor light emitting track ball according to claim 1, **characterized in that** light source control means is provided to individually control the luminance of said light source for each light source, and to cause said ball to emit light of an arbitrary color by the combination of said individual control.

3. The multicolor light emitting track ball according to claim 2, **characterized in that** said light source control means can continuously change the luminance of light source to be controlled, and can continuously change the color of light emitted by said ball.

4. The multicolor light emitting track ball according to claim 2 or 3, **characterized in that** said light source control means has a luminance control circuit for controlling the luminance of light source, and the control of light source by said luminance control circuit is carried out by another particular electronic circuit connected to said luminance control circuit.

5. The multicolor light emitting track ball according to any one of claims 1 to 4, **characterized in that** three light sources are provided to emit light of red, green and blue colors.

6. The multicolor light emitting track ball according to any one of claims 1 to 5, **characterized in that** said light source is a lamp or a light emitting diode.

7. A lightness-changing type multicolor light emitting track ball having a light transmitting ball and a light source for irradiating said ball with light and causing said ball to emit light, **characterized in that** the hue of color generated by said light source is single, and light source control means is provided to control the luminance of said light source.

8. The lightness-changing type multicolor light emitting track ball according to claim 7, **characterized in that** said light source control means can continuously change the luminance of light source to be controlled, and can continuously change the lightness of color of light emitted by said ball.

9. The lightness-changing type multicolor light emitting track ball according to claim 7 or 8, **characterized in that** said light source control means has a luminance control circuit for controlling the luminance of light source, and the control of light source by said luminance control circuit is carried out by another particular electronic circuit connected to said luminance control circuit.
